# FASCICULE DE BREVET EUROPEEN

(11) **EP 3 064 639 B1**
(45) Date de publication et mention de la délivrance du brevet: **18.04.2018**
(21) Numéro de dépôt: 16158091.5
(22) Date de dépôt: 01.03.2016
(51) Int. Cl.: D06F 75/10, D06F 75/18

(54) **APPAREIL ELECTROMENAGER DE REPASSAGE COMPORTANT UN FILTRE DESTINE A RETENIR DES PARTICULES DE TARTRE TRANSPORTEES PAR LA VAPEUR**
ELEKTROHAUSHALTSGERÄT ZUM BÜGELN, DAS EINEN FILTER ZUM ZURÜCKHALTEN DER MIT DEM DAMPF TRANSPORTIERTEN KALKPARTIKEL UMFASST
IRONING ELECTRICAL APPLIANCE COMPRISING A FILTER FOR RETAINING SCALE PARTICLES CARRIED BY THE STEAM

(30) Priorité: 03.03.2015 FR 1551789
(43) Date de publication de la demande: 07.09.2016
(73) Titulaire: SEB S.A., 69130 Ecully (FR)
(72) Inventeur: COLLET, Frédéric, 38200 VIENNE (FR)
(74) Mandataire: Bourrières, Patrice

(56) Documents cités:
- EP-A1- 0 569 822
- EP-A1- 0 711 862
- DE-A1-102004 032 361
- FR-A1- 2 981 371

## Description

La présente invention concerne un appareil de repassage comportant une chambre de vaporisation instantanée reliée à des trous de sortie de vapeur par un circuit de distribution de vapeur comprenant un filtre destiné à retenir au moins une partie des particules de tartre transportées par le flux de vapeur.

Il est connu, de la demande de brevet FR2979924 déposée par la demanderesse, un fer à repasser comprenant un circuit de distribution de vapeur reliant une chambre de vaporisation instantanée à des trous de sortie de vapeur ménagés dans la semelle du fer à repasser. Dans ce document, le circuit de distribution de vapeur comporte un filtre destiné à retenir les particules de tartre transportées par le flux de vapeur à la sortie de la chambre de vaporisation.

Un tel fer à repasser présente l'avantage de retenir, en amont du filtre, les plus grosses particules de tartre évitant que ces dernières ne soient émises par les trous de sortie de vapeur de la semelle et ne viennent tâcher le linge.

Cependant, un tel fer à repasser présente l'inconvénient d'avoir un circuit de distribution de vapeur qui s'encombre progressivement de particules de tartre en amont du filtre de sorte que les performances de l'appareil, et notamment le débit de vapeur, se dégradent au fil du temps.

Il est connu de la demande de brevet DE102004032361, un fer à repasser comportant un circuit de distribution de vapeur comprenant un dispositif de filtration, constitué par un séparateur centrifuge, destiné à retenir des particules de tartre transportées par le flux de vapeur. Le séparateur centrifuge est amovible de l'appareil pour son nettoyage et comporte un orifice d'évacuation du tartre qui permet de nettoyer le séparateur lorsque le séparateur centrifuge est démonté du fer à repasser.

Cependant, un tel fer à repasser présente une construction complexe qui impose le démontage du dispositif de filtration pour permettre l'évacuation du tartre, ce qui le rend coûteux à fabriquer et peu ergonomique à utiliser.

Aussi un but de la présente invention est de proposer un appareil de repassage remédiant à ces inconvénients.

A cet effet, l'invention se rapporte à un appareil de repassage comportant un circuit de distribution de vapeur comprenant au moins un filtre destiné à retenir des particules de tartre transportées par le flux de vapeur, caractérisé en ce qu'il comporte un orifice d'évacuation du tartre qui communique avec une partie du circuit de distribution de vapeur située en amont du filtre et en ce que le filtre est monté de manière fixe dans l'appareil ou est amovible par un orifice distinct de l'orifice d'évacuation du tartre.

L'appareil ainsi réalisé présente l'avantage de posséder un orifice d'évacuation du tartre permettant l'évacuation des particules de tartre présentes dans le circuit de distribution de vapeur.

Selon une autre caractéristique de l'invention, le filtre est configuré pour contenir les particules de tartre dans une cavité de récupération du tartre.

Une telle caractéristique permet de rassembler les particules de tartre dans une zone dédiée de l'appareil, ce qui permet de faciliter leur évacuation par l'orifice d'évacuation du tartre.

Selon une autre caractéristique de l'invention, le filtre est constitué par une grille avec des ouvertures inférieures à 0,6 mm de côté, et avantageusement inférieures à 0,4 mm de côté, la grille présentant avantageusement une surface totale de filtration supérieure à 5 cm² et préférentiellement supérieure à 8 cm².

La taille réduite des ouvertures permet de ne laisser passer que des particules de tartre peu ou pas visibles à l'oeil nu vers les trous de sortie de vapeur. La surface importante du filtre permet, quant à elle, d'offrir une section de passage cumulée à travers les porosités du filtre suffisamment importante pour conserver un débit de vapeur acceptable malgré un colmatage partiel du filtre. De plus, une telle surface de filtration permet d'obtenir des pertes de charges compatibles avec la diffusion d'un flux de vapeur avantageusement supérieur à 20 gr/min, et préférentiellement supérieur à 30 gr/min, avec un générateur de vapeur constitué par une chambre de vaporisation instantanée alimentée classiquement par un boisseau à goutte.

Selon une autre caractéristique de l'invention, l'orifice d'évacuation du tartre est fermé par un bouchon amovible accessible depuis l'extérieur de l'appareil.

Selon une autre caractéristique de l'invention, le filtre est disposé dans une partie du circuit de distribution de vapeur au niveau de laquelle le flux de vapeur effectue un changement brutal de direction, de préférence d'au moins 90°.

Une telle caractéristique présente l'avantage de limiter la vitesse d'encrassement du filtre, les particules les plus lourdes étant entrainées, de part leur inertie, en dehors du filtre, dans une zone de stockage.

Selon une autre caractéristique de l'invention, le filtre est porté par un cadre monté de manière amovible dans un logement.

Avantageusement, des moyens d'étanchéité sont disposés à l'interface entre le cadre et le logement.

Une telle caractéristique permet d'éviter le passage du flux de vapeur entre le cadre et le logement.

Selon une autre caractéristique de l'invention, l'appareil comporte un récipient récupérateur de tartre amovible s'introduisant dans la cavité de récupération du tartre par l'orifice d'évacuation du tartre.

Une telle caractéristique présente l'avantage de permettre simplement l'évacuation du tartre en retirant le récipient récupérateur de tartre.

Selon une autre caractéristique de l'invention, les trous de sortie de vapeur sont ménagés dans une semelle de repassage d'un fer à repasser.

Selon une autre caractéristique de l'invention, le flux de vapeur cheminant dans le circuit de distribution de vapeur s'écoule de bas en haut au travers du filtre lorsque le fer à repasser repose horizontalement sur sa semelle.

Une telle caractéristique présente l'avantage de bloquer les particules contre la face inférieure du filtre de sorte que ces particules se détachent par gravité du filtre lors de l'arrêt du flux de vapeur.

Selon une autre caractéristique de l'invention, l'appareil de repassage comporte une chambre de vaporisation instantanée.

Une telle caractéristique présente l'avantage d'offrir une construction simple pour produire de la vapeur.

Selon une autre caractéristique de l'invention, le filtre présente une forme et/ou une inclinaison favorisant l'écoulement des gouttelettes d'eau le long du filtre, cet écoulement des gouttelettes d'eau présentant l'avantage d'emporter une partie des particules de tartre accrochées au filtre, participant ainsi à son nettoyage. Ainsi, le filtre pourra présenter une forme plane et être incliné par rapport à l'horizontal ou présenter une forme non plane, par exemple bombée.

Une telle caractéristique présente l'avantage d'engendrer un glissement des gouttelettes d'eau le long de la forme bombée du filtre.

Selon une autre caractéristique de l'invention, le récipient récupérateur de tartre présente une extrémité avant ouverte par laquelle pénètre le flux de vapeur et une extrémité postérieure fermée, le récipient comportant une ouverture latérale par laquelle le flux de vapeur s'échappe en direction des trous de sortie de vapeur.

Une telle caractéristique permet de bénéficier de l'effet d'entrainement du flux de vapeur traversant le récipient pour augmenter la quantité de tartre récupérée dans le récipient.

Selon une autre caractéristique de l'invention, le récipient récupérateur de tartre supporte un joint d'étanchéité venant au contact de la cavité de récupération du tartre.

Selon une autre caractéristique de l'invention, le récipient récupérateur de tartre comporte un volume de stockage supérieur à 4 cm³.

Une telle caractéristique permet de recueillir les particules de tartre accumulées entre deux entretiens, ainsi que l'eau non vaporisée dans la chambre de vaporisation, sans venir souiller le filtre.

Selon encore une autre caractéristique de l'invention, le fer à repasser comporte un talon sur lequel il peut reposer lors des phases inactives de repassage.

Selon une autre caractéristique de l'invention, la chambre de vaporisation instantanée est reliée à la cavité de récupération du tartre par une ouverture ménagée au niveau de l'extrémité arrière de la chambre de vaporisation, le flux de vapeur produit par la chambre de vaporisation s'échappant au travers du circuit de distribution de vapeur par l'ouverture ménagée à l'arrière de la chambre de vaporisation.

Selon une autre caractéristique de l'invention, l'orifice d'évacuation du tartre débouche au niveau du talon du fer à repasser.

Une telle caractéristique présente l'avantage d'offrir un excellent accès à l'orifice d'évacuation du tartre lorsque le fer à repasser repose sur sa semelle.

Selon une autre caractéristique de l'invention, la cavité de récupération du tartre se trouve en porte à faux derrière la semelle lorsque le fer à repasser repose sur sa semelle,

Une telle caractéristique permet d'éloigner la cavité de récupération du tartre de la semelle et donc de limiter le risque de brulure lors de la manipulation du bouchon.

Selon une autre caractéristique de l'invention, le fer à repasser comporte un réservoir comprenant un dispositif pour la diffusion d'un agent antitartre.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un fer à repasser selon un premier mode particulier de réalisation de l'invention ;
- la figure 2 est une vue en coupe longitudinale du corps chauffant et de la semelle équipant le fer à repasser de la figure 1 ;
- la figure 3 est une vue en perspective du corps chauffant de la figure 2 démuni de son couvercle de fermeture ;
- la figure 4 est une vue de dessus du corps chauffant de la figure 2 ;
- les figures 5 et 6 sont des vues en perspective, partiellement arrachée, du corps chauffant de la figure 2 respectivement avec et sans le récipient récupérateur de tartre ;
- la figure 7 est une vue en perspective du récipient récupérateur de tartre fixé sur le bouchon équipant le fer à repasser de la figure 1 ;
- la figure 8 est une vue en perspective d'un fer à repasser selon un deuxième mode de réalisation de l'invention ;
- la figure 9 est une vue en coupe longitudinale du corps chauffant et de la semelle équipant le fer de la figure 8.

Seuls les éléments nécessaires à la compréhension de l'invention ont été représentés. Pour faciliter la lecture des dessins les mêmes éléments portent les mêmes références d'une figure à l'autre.

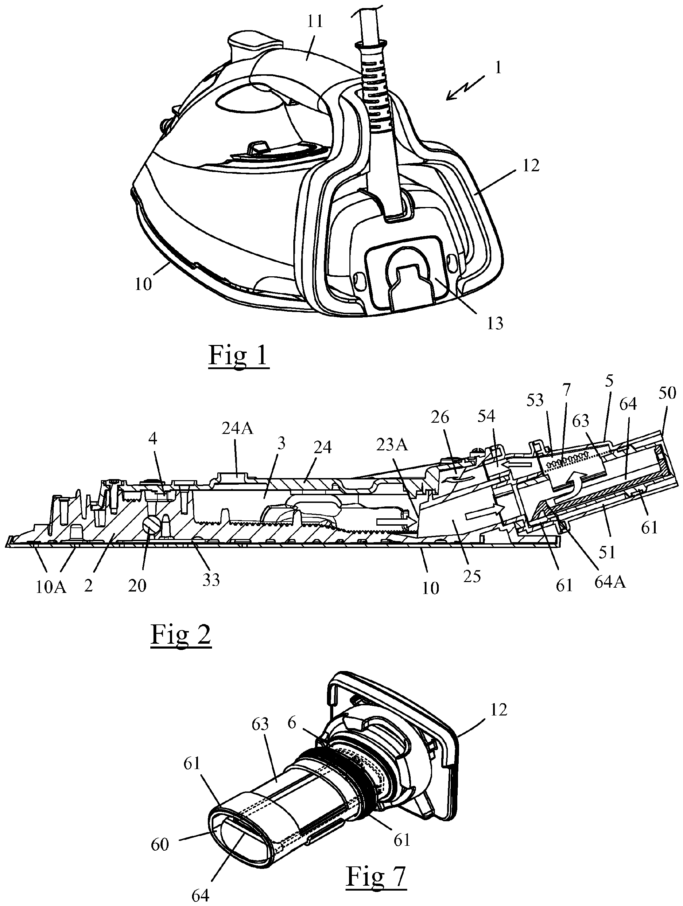

La figure 1 illustre un fer à repasser 1 à vapeur comportant une semelle 10 de repassage munie d'un ensemble de trous de sortie de vapeur 10A, visibles seulement sur la figure 2, la semelle 10 étant surmontée d'un boîtier en matière plastique comprenant une poignée de préhension 11 à son extrémité supérieure et un talon 12 dans sa partie arrière sur lequel le fer à repasser peut reposer sensiblement verticalement lors des phases inactives de repassage.

Le talon 12 comporte deux bras délimitant entre eux un espace recevant un bouchon 13 amovible donnant accès à un orifice d'évacuation du tartre 50, visible sur la figure 2, le bouchon 13 étant fixé sur une surface postérieure du boîtier par une fixation de type baïonnette semblable à celle décrite plus en détails dans la demande de brevet FR2981371 déposée par la demanderesse, la surface postérieure du boîtier étant légèrement inclinée vers l'avant pour offrir un accès plus aisé lorsque le fer à repasser repose horizontalement sur sa semelle 10.

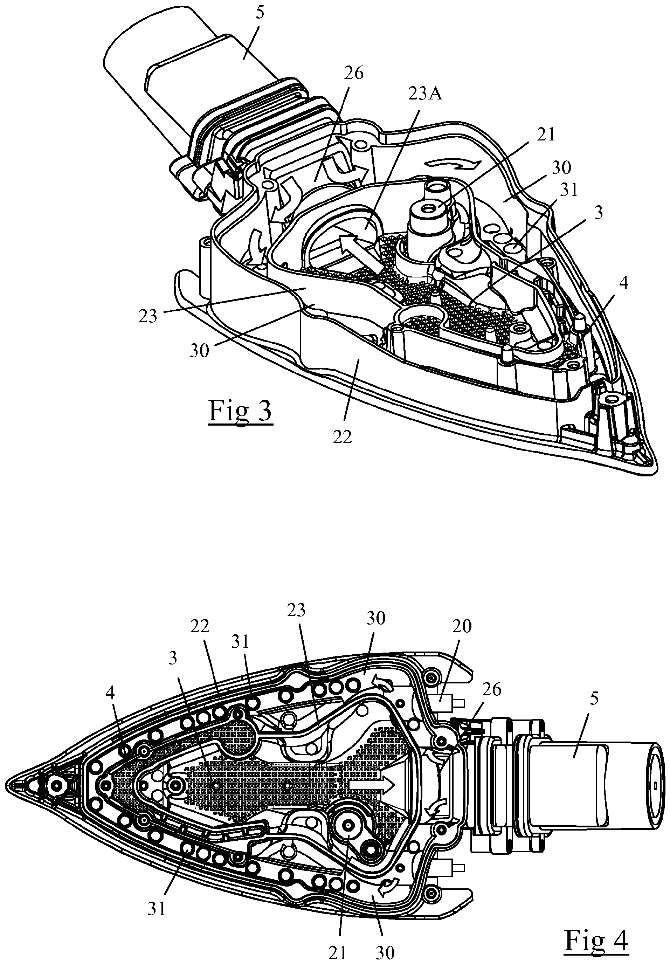

Conformément aux figures 2 à 4, la semelle 10 du fer à repasser est liée thermiquement et mécaniquement à un corps chauffant 2 intégré dans la partie basse du boîtier, le corps chauffant 2 comportant une fonderie en aluminium comprenant classiquement un élément résistif 20 cintré en fer à cheval et un bossage 21, visible sur la figure 3, prévu pour recevoir un thermostat de régulation de la température de la semelle 10.

Le corps chauffant 2 comporte une paroi périphérique 22 qui délimite latéralement un espace comprenant une chambre de vaporisation 3 principale et une chambre de survapeur 4, de type à vaporisation instantanée, comportant un fond présentant une multitude de plots pyramidaux permettant d'augmenter la surface d'échange thermique.

La chambre de vaporisation 3 est disposée au centre du corps chauffant 2 et est reliée aux trous de sortie de vapeur de la semelle 10 par un circuit de distribution de vapeur comprenant deux canaux latéraux 30 s'étendant de part et d'autre de la chambre de vaporisation 3 et se rejoignant à l'extrémité avant et à l'extrémité arrière du corps chauffant 2, les canaux latéraux 30 comportant classiquement des orifices 31 traversant le corps chauffant 2 pour déboucher sur la face inférieure du corps chauffant, au niveau de cavités de distribution de vapeur 33, visibles sur la figure 2, disposées en regard des trous de sortie de vapeur 10A de la semelle.

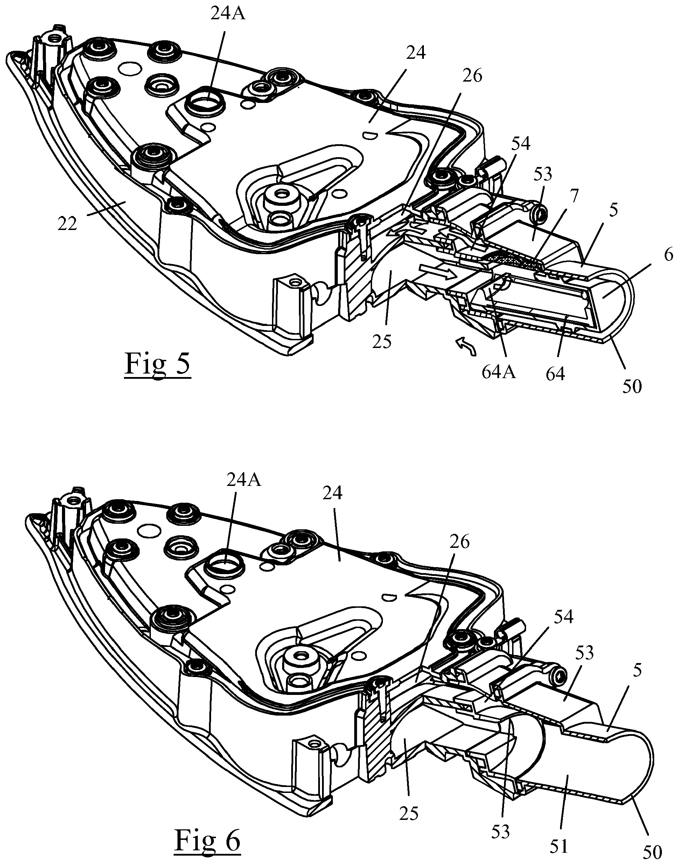

Conformément aux figures 2 et 5, le corps chauffant 2 comporte également une plaque de fermeture 24 qui vient reposer sur le bord supérieur de la paroi périphérique 22, cette plaque de fermeture 24 étant surmontée d'un réservoir d'eau, non représenté sur les figures, intégré dans le boîtier du fer à repasser, alimentant en eau la chambre de vaporisation 3 par un orifice 24A de la plaque de fermeture 24 recevant, de manière connue en soi, un boisseau goutte-à-goutte, non représenté sur les figures, permettant la production d'un débit de vapeur en continu de l'ordre de 40 à 70 gr/min.

La chambre de vaporisation 3 est délimitée latéralement par une cloison 23 remontant jusqu'à la plaque de fermeture 24, en étant liée de manière étanche avec cette dernière, de sorte que la vapeur produite dans la chambre de vaporisation 3 ne peut s'échapper que par une ouverture 23A ménagée dans la cloison 23 au niveau de l'extrémité arrière de la chambre de vaporisation 3.

Comme on peut le voir sur la figure 2, l'ouverture 23A de la cloison débouche sur un conduit 25, de section transversale sensiblement oblongue, réalisé dans la fonderie du corps chauffant 2, ce conduit 25 s'étendant obliquement par rapport au plan de la semelle 10, en faisant un angle de l'ordre de 20°, et étant prolongé par un collecteur 5 en matière plastique, par exemple du type PPS (Polysulfure de phénylène), intégré dans le boîtier du fer à repasser 1.

Le collecteur 5 comprend une cavité 51 de récupération du tartre s'étendant axialement dans le prolongement du conduit 25 et débouchant sur le talon 12 du fer à repasser au niveau de l'orifice d'évacuation du tartre 50 fermé par le bouchon 13, la cavité 51 se trouvant en porte à faux derrière la semelle 10 lorsque le fer à repasser repose sur sa semelle 10 et présentant une section transversale oblongue.

Comme on peut le voir sur les figures 2 et 6, le collecteur 5 comporte un collecteur d'échappement 53 dans la partie supérieure de la cavité 51 de récupération du tartre, ce collecteur d'échappement 53 débouchant dans un canal de retour 54 s'étendant au-dessus du conduit 25 et débouchant dans une chambre de répartition 26 disposée à l'entrée des deux canaux latéraux 30.

Conformément aux figures 5 et 7, la cavité 51 de récupération du tartre reçoit un récipient 6 récupérateur de tartre amovible présentant une forme complémentaire de la cavité 51 de récupération du tartre, le récipient 6 récupérateur de tartre pouvant être extrait ou introduit dans la cavité 51 par l'orifice d'évacuation du tartre 50. Le récipient 6 comporte une extrémité avant 60 ouverte par laquelle le flux de vapeur émis par la chambre de vaporisation 3 est admis dans le récipient 6 et une extrémité arrière fermée, avantageusement fixée au bouchon 13, ainsi que cela est illustré sur la figure 7. Le récipient 6 comprend une partie inférieure munie d'une cuillère 64 de rétention du tartre comportant une partie creuse dans laquelle les particules de tartre sont stockées, l'extrémité avant de la cuillère présentant une marche 64A permettant d'éviter que le tartre récupéré dans la cuillère 64 ne retourne par gravité dans la chambre de vaporisation lorsque le fer à repasser 1 est disposé sur sa semelle 10.

Le récipient 6 est préférentiellement réalisé en matériau plastique, du type polyamide PA 6-6 renforcé de fibre de verre à 30%, et supporte un joint 61 en silicone venant au contact de la paroi intérieure de la cavité 51 de récupération du tartre à proximité de l'orifice d'évacuation du tartre, le récipient 6 comportant, en amont du joint 61, une ouverture 63 ménagée dans la moitié supérieure venant en regard du collecteur d'échappement 53 de la cavité 51 de récupération du tartre lorsque le récipient 6 est intégralement introduit dans la cavité 51.

Conformément à la figure 5, le collecteur d'échappement 53 comporte une ouverture d'entrée comprenant un filtre 7 constitué par une grille de filtration bombée s'étendant sur toute la surface de l'ouverture d'entrée, cette grille 7 de filtration étant fixée en bordure de l'ouverture et étant avantageusement recouverte d'un revêtement hydrophobe et/ou anti-adhérent tel que du PTFE (polytétrafluoroéthylène).

La grille 7 de filtration présente des ouvertures calibrées pour retenir les particules de tartre les plus grosses et possède une taille adaptée pour offrir une section de passage suffisante pour le débit de vapeur requis.

A titre d'exemple, la grille 7 pourra comporter des ouvertures carrées de moins de 0.6 mm de côté, et préférentiellement comprises entre 0.1 mm et 0.4 mm, la surface de la grille étant préférentiellement supérieure à 8 cm² pour des ouvertures carrées de 0.2 mm et un débit de vapeur prévu de l'ordre de 40 à 50 gr/min. La grille 7 sera avantageusement réalisée en fil d'inox de l'ordre de 0,1 mm de diamètre ou d'un diamètre inférieur.

La grille 7 ainsi disposée présente l'avantage de se trouver suffisamment éloignée de la chambre de vaporisation 3 pour que l'eau en ébullition dans la chambre de vaporisation 3 ne vienne pas, par projection, souiller la grille 7 de filtration. De plus, la disposition de la grille 7 en hauteur à l'entrée du collecteur d'échappement 53 permet d'éviter son souillage par de l'eau pouvant parvenir dans la cavité 51 à la suite d'une vaporisation incomplète de l'eau injectée dans la chambre de vaporisation 3 lors d'une séance de repassage lorsque le fer à repasser repose sur sa semelle 10.

L'éloignement de la grille 7 de filtration par rapport à la chambre de vaporisation 3, ainsi que l'utilisation de matériaux plastiques pour le collecteur 5 et le récipient 6, présentent également l'avantage de permettre l'obtention d'une température relativement faible dans l'environnement de la grille 7, autour de 100°C, évitant ainsi une vaporisation forte de l'eau pouvant parvenir dans la zone du récipient 6 située sous la grille 7.

De manière préférentielle, l'ouverture 63 est éloignée de l'extrémité arrière du récipient 6 de telle sorte qu'il résulte un volume de stockage de l'ordre de 4 à 5 cm³ dans le récipient 6 dans lequel les particules de tartre tombent lorsque le fer à repasser 1 est placé verticalement sur son talon 12.

L'écoulement du flux de vapeur dans le fer à repasser 1 ainsi réalisé va maintenant être décrit.

Lorsque l'eau issue du boisseau goutte-à-goutte parvient au contact du fond de la chambre de vaporisation 3, elle se vaporise instantanément, ce qui provoque le dégagement d'un flux de vapeur, illustré par des flèches sur les figures 2 à 5, qui s'échappe par l'ouverture 23A de la cloison 23 puis s'écoule successivement au travers du conduit 25 de sortie, du récipient 6, de la grille 7, du canal de retour 54 et des canaux latéraux 30. Le flux de vapeur traverse ensuite les orifices 31 pour déboucher sur la face inférieure de la semelle 10 et s'échapper par les trous de sortie 10A de la semelle.

L'évaporation de l'eau crée la formation d'une couche de carbonate de calcium dans le fond de la chambre de vaporisation 3 qui se désagrège progressivement en petites particules de tartre sous l'effet notamment de la rétractation du corps chauffant 2 lors des phases de refroidissement entre deux séances de repassage.

Les particules de tartre présentent dans la chambre de vaporisation 3 se trouvent emmenées progressivement par le flux de vapeur dans le conduit 25 et se trouvent, pour partie, envoyées de par leur inertie dans le fond du récipient 6 récupérateur de tartre où elles se trouvent piégées de sorte qu'elles tombent par gravité dans la cuillère 64, et pour partie, envoyées vers la grille 7. Cette séparation inertielle des particules de tartre s'effectue notamment grâce au virage de l'ordre de 90° qu'effectue le flux de vapeur à l'entrée de la grille 7.

Le déplacement des particules de tartre vers le récipient 6 s'effectue également par gravité à chaque fois que le fer à repasser 1 est placé sur son talon 12, le volume de stockage ménagé dans le fond du récipient 6 étant adapté pour recevoir les particules de tartre, accompagnées d'éventuelles gouttes d'eau, sans que ces dernières ne viennent au contact de la grille 7, évitant ainsi le souillage de la grille 7.

Les particules de tartre qui sont emportées par le flux de vapeur vers la grille 7, et qui possèdent une taille supérieure à la taille des ouvertures de la grille 7, sont quant à elles piégées sous la grille 7, seules les particules de tartre les plus fines, pratiquement invisibles à l'oeil, pouvant passer au travers de la grille 7 et s'échapper par les trous de sortie de vapeur de la semelle 10.

Lors de l'arrêt de la vapeur, la plupart des particules piégées par la grille 7 retombent par gravité dans la cuillère 64 du récipient 6. Quelques particules peuvent toutefois rester collées sur la grille 7 et contribuer au colmatage progressif de cette dernière, la grille 7 s'entartrant également du fait de l'évaporation des éventuelles gouttelettes d'eau parvenant au contact de la grille 7.

Lorsqu'un nettoyage du fer à repasser 1 est nécessaire, c'est-à-dire après plusieurs séances de repassage à la vapeur, ou lorsqu'un témoin d'alerte est activé sur le fer à repasser, l'utilisateur peut aisément extraire la majeure partie du tartre présent dans le fer à repasser en plaçant le fer à repasser 1 horizontalement sur sa semelle 10, de manière à accéder facilement au bouchon 13, et en extrayant le récipient 6 récupérateur de la cavité 51 en déverrouillant le bouchon 13 et en le déplaçant vers l'arrière de manière à faire coulisser axialement le récipient 6 au travers de l'orifice d'évacuation du tartre 50.

Lors de cette extraction du récipient 6, le tartre est conservé dans la cuillère 64 grâce à la forme creuse de cette dernière et à la présence de la marche 64A à proximité de l'extrémité avant de la cuillère.

Le contenu du récipient 6 peut ensuite être vidé et le récipient 6 peut être passé sous l'eau du robinet pour son nettoyage.

Le fer à repasser ainsi réalisé présente donc l'avantage d'assurer une très bonne filtration des particules de tartre, grâce à la présence de la grille de filtration, permettant d'éviter le rejet des particules de tartre les plus grosses sur le linge. De plus, le fer à repasser permet une évacuation aisée des particules de tartre récupérées à l'aide du récipient récupérateur de tartre de sorte qu'il peut être très facilement maintenu dans un état de propreté propice à un fonctionnement optimal du fer à repasser et notamment de la chambre de vaporisation. Le fer ainsi obtenu présente donc l'avantage d'avoir une durée de vie améliorée avec un maintien des performances de repassage à un niveau élevé.

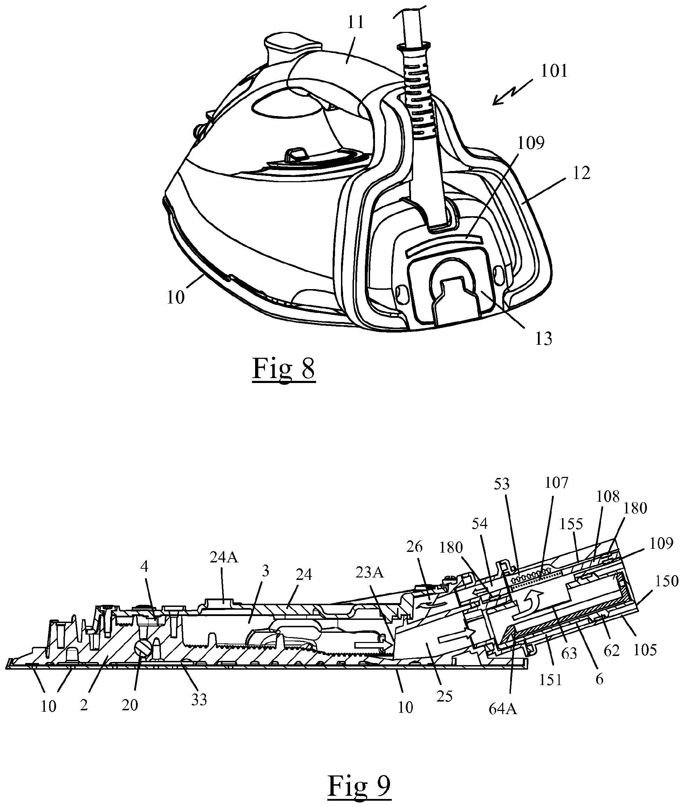

Les figures 8 et 9 illustrent un deuxième mode de réalisation de l'invention correspondant à une variante de réalisation du premier mode de réalisation décrit aux figures 1 à 7. Pour une meilleure compréhension de l'invention, les composants de l'appareil qui sont inchangés par rapport au premier mode de réalisation conservent la numérotation qui leur avait été attribué, seuls les composants ayant évolués étant renumérotés.

Conformément à ces figures, le fer à repasser 101 selon ce deuxième mode de réalisation se différencie du fer à repasser 1 selon le premier mode de réalisation en ce qu'il comporte un filtre constitué par une grille 107 montée de manière amovible sur le boîtier du fer à repasser, la grille 107 présentant des ouvertures et une surface semblables à celles décrites pour la grille 7 du premier mode de réalisation

La grille 107 est portée par un cadre 108 rigide monté de manière amovible dans un logement 155 ménagé dans un collecteur 105 venant dans le prolongement du conduit 25 du corps chauffant 2, le collecteur 105 comprend une cavité 151 de récupération du tartre s'étendant axialement dans le prolongement du conduit 25 et débouchant sur le talon 12 du fer à repasser au niveau d'un orifice d'évacuation du tartre 150.

Comme on peut le voir sur la figure 9, le logement 155 est disposé au dessus de la cavité 151 de récupération du tartre et débouche sur le talon 12 du fer à repasser au niveau d'une ouverture 109 distincte de l'orifice d'évacuation du tartre 150.

Le cadre 108 est avantageusement réalisé dans un matériau plastique, du type polyamide PA 6-6 renforcé de fibre de verre à 30%, et supporte des joints 180 en silicone venant au contact de la paroi intérieure du logement 155 pour assurer l'étanchéité de la liaison et éviter notamment que le flux de vapeur ne puisse s'échapper par l'ouverture 109.

Le cadre 108 est avantageusement muni d'une languette de préhension, non représentée sur les figures, facilitant son extraction et sa mise en place dans le logement 155.

Dans ce deuxième mode réalisation, tout comme pour le premier mode de réalisation, la vapeur produite par la chambre de vaporisation 3 s'échappe par le conduit 25 puis dans la cavité 151 en passant au travers de l'extrémité avant ouverte du récipient 6 récupérateur de tartre, la vapeur passant ensuite successivement par l'ouverture 63 latérale et au travers de la grille 107 avant d'être diffusée vers le trous de sortie de vapeur 10A de la semelle.

En conséquence, les particules de tartre qui sont emportées par le flux de vapeur vers la grille 107, et qui possèdent une taille supérieure à la taille des ouvertures de la grille 107, sont piégées sous la grille 107, seules les particules de tartre les plus fines pouvant passer au travers de la grille 107 et s'échapper par les trous de sortie de vapeur 10A de la semelle.

Dans ce mode de réalisation, la grille 107 présente l'avantage d'être facilement amovible de l'appareil en extrayant le cadre 108 par l'ouverture 109 ménagée sur la face arrière du fer à repasser.

Ainsi, l'utilisateur peut de sa propre initiative, ou lorsqu'il y est invité par une alarme de type sonore ou visuelle, examiner l'état de propreté de la grille 107 afin d'effectuer si nécessaire un nettoyage de la grille 107, des moyens de grattage pouvant avantageusement être prévus sur la paroi intérieure du logement 155 afin que chaque mise en place et extraction du cadre 108 entraine un grattage de la grille 107 participant à son nettoyage.

L'appareil selon ce mode de réalisation pourra également être vendu avec plusieurs cadres 108 munis de grilles 107 qui pourront être soit identiques pour permettre à l'utilisateur d'échanger un cadre 108 muni d'une grille obstruée par un cadre muni d'une grille 107 neuve ou nettoyée, soit présenter des capacités de filtration différentes afin d'adapter la taille de filtration au besoin de l'utilisateur, ces cadres munis de grilles pouvant également être vendus en tant que pièce de rechange.

Bien entendu, l'invention n'est nullement limitée au mode de réalisation précédemment décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation de l'invention non représentée, le filtre pourra être extrait de l'appareil par une ouverture débouchant sur le côté du fer à repasser.

Ainsi, dans une variante de réalisation non représentée, le réservoir d'eau pourra comporter un dispositif pour la diffusion d'un agent antitartre tel qu'un composé phosphanate, de l'hexamétaphosphate de sodium ou un agent antitartre biodégradable te que décrit dans la demande de brevet déposée par la demanderesse sous le numéro de demande FR1453381.

Ainsi, dans une variante de réalisation non représentée, la chambre de vaporisation pourra être découplée thermiquement de la semelle, cette dernière pouvant comporter son propre élément chauffant.

## Revendications

1. Appareil de repassage (1) comportant un circuit de distribution de vapeur comprenant au moins un filtre (7; 107) destiné à retenir des particules de tartre transportées par le flux de vapeur, l'appareil comportant un orifice d'évacuation du tartre (50; 150) qui communique avec une partie du circuit de distribution de vapeur située en amont du filtre (7; 107), **caractérisé en ce que** l'orifice d'évacuation du tartre (50; 150) est fermé par un bouchon (13) amovible accessible depuis l'extérieur de l'appareil et **en ce que** ledit filtre (7; 107) est monté de manière fixe ou est amovible par un orifice (109) distinct de l'orifice d'évacuation du tartre (50).

2. Appareil de repassage (1) selon la revendication 1, **caractérisé en ce que** le filtre (7; 107) est configuré pour contenir les particules de tartre dans une cavité (51; 151) de récupération du tartre.

3. Appareil de repassage (1) selon l'une quelconque des revendications 1 à 2, **caractérisé en ce que** le filtre (7; 107) est constitué par une grille avec des ouvertures inférieures à 0,6 mm de côté, la grille présentant avantageusement une surface totale de filtration supérieure à 5 cm².

4. Appareil de repassage (1) selon l'une quelconque des revendications 1 à 3, **caractérisé en ce que** le filtre (7; 107) est disposé dans une partie du circuit de distribution de vapeur au niveau de laquelle le flux de vapeur effectue un changement brutal de direction, de préférence d'au moins 90°.

5. Appareil de repassage (1) selon l'une quelconque des revendications 1 à 4, **caractérisé en ce que** le filtre (107) est porté par un cadre (108) monté de manière amovible dans un logement (155).

6. Appareil de repassage (1) selon la revendication 5, **caractérisé en ce que** des moyens d'étanchéité (180) sont disposés à l'interface entre le cadre (108) et le logement (155).

7. Appareil de repassage (1) selon l'une quelconque des revendications 1 à 6, **caractérisé en ce qu'**il comporte un récipient (6) récupérateur de tartre amovible s'introduisant dans la cavité (51; 151) de récupération du tartre par l'orifice d'évacuation du tartre (50; 150).

8. Appareil de repassage selon l'une quelconque des revendications 1 à 7, **caractérisé en ce que** les trous de sortie de vapeur (10A) sont ménagés dans une semelle (10) de repassage d'un fer à repasser (1).

9. Appareil de repassage selon la revendication 8, **caractérisé en ce que** le flux de vapeur cheminant dans le circuit de distribution de vapeur s'écoule de bas en haut au travers du filtre (7; 107) lorsque le fer à repasser (1) repose horizontalement sur sa semelle (10).

10. Appareil de repassage (1) selon l'une quelconque des revendications 1 à 9, **caractérisé en ce qu'**il comporte une chambre de vaporisation (3) instantanée.

## Patentansprüche

1. Bügelgerät (1), das einen Dampfverteilungskreis aufweist, der mindestens einen Filter (7; 107) umfasst, der dazu bestimmt ist, Kesselsteinpartikel zurückzuhalten, die durch den Dampfstrom transportiert werden, wobei das Gerät eine Öffnung zur Entleerung von Kesselstein (50; 150) aufweist, die mit einem Teil des Dampfverteilungskreises verbunden ist, das sich stromaufwärts von dem Filter (7; 107) befindet, **dadurch gekennzeichnet, dass** die Öffnung zur Entleerung von Kesselstein (50; 150) durch einen entfernbaren Stopfen (13) verschlossen ist, der von dem Äußeren des Geräts zugänglich ist, und dass der Filter (7; 107) auf feste oder entfernbare Weise durch eine Öffnung (109) angebracht ist, die von der Öffnung zur Entleerung von Kesselstein (50) verschieden ist.

2. Bügelgerät (1) nach Anspruch 1, **dadurch gekennzeichnet, dass** der Filter (7; 107) konfiguriert ist, um die Kesselsteinpartikel in einen Hohlraum (51; 151) zur Rekuperation von Kesselstein zu enthalten.

3. Bügelgerät (1) nach einem der Ansprüche 1 bis 2, **dadurch gekennzeichnet, dass** der Filter (7; 107) aus einem Gitter mit Öffnungen besteht, die kleiner als 0,6 mm entlang der Seite sind, wobei das Gitter vorteilhafterweise eine Gesamtfiltrationsfläche von mehr als 5 cm² aufweist.

4. Bügelgerät (1) nach einem der Ansprüche 1 bis 3, **dadurch gekennzeichnet, dass** der Filter (7; 107) in einem Teil des Dampfverteilungskanals angeordnet ist, bei dem der Dampfstrom eine brutale Änderung der Richtung von vorzugsweise mindestens 90° vornimmt.

5. Bügelgerät (1) nach einem der Ansprüche 1 bis 4, **dadurch gekennzeichnet, dass** der Filter (107) von einem Rahmen (108) getragen wird, der abnehmbar in einem Gehäuse (155) angebracht ist.

6. Bügelgerät (1) nach Anspruch 5, **dadurch gekennzeichnet, dass** Dichtungsmittel (180) an der Grenzfläche zwischen dem Rahmen (108) und dem Gehäuse (155) angeordnet sind.

7. Bügelgerät (1) nach einem der Ansprüche 1 bis 6, **dadurch gekennzeichnet, dass** es einen entfernbaren Rekuperationsbehälter (6) für Kesselstein aufweist, der in dem Hohlraum zur Rekuperation von Kesselstein (51; 151) durch die Öffnung zur Entleerung von Kesselstein (50; 150) eingeführt ist.

8. Bügelgerät nach einem der Ansprüche 1 bis 7, **dadurch gekennzeichnet, dass** die Dampfaustrittslöcher (10A) in einer Sohle (10) zum Bügeln eines Bügeleisens (1) ausgebildet sind.

9. Bügelgerät nach Anspruch 8, **dadurch gekennzeichnet, dass** der Dampfstrom, der in dem Dampfverteilungskanal läuft, von unten nach oben durch den Filter (7; 107) strömt, wenn das Bügeleisen (1) horizontal auf seiner Sohle (10) aufliegt.

10. Bügelgerät (1) nach einem der Ansprüche 1 bis 9, **dadurch gekennzeichnet, dass** es eine Kammer zur sofortigen Verdampfung (3) aufweist.

## Claims

1. Ironing apparatus (1) comprising a circuit for dispensing vapour comprising at least one filter (7; 107) intended to retain particles of scale transported by the flow of vapour, the apparatus comprising an orifice (50; 150) for evacuating the scale that is connected to a portion of the circuit for dispensing vapour located upstream of the filter (7; 107), **characterised in that** the orifice (50; 150) for evacuating the scale is closed by a removable plug (13) accessible from the outside of the apparatus and **in that** said filter (7; 107) is mounted in a stationary manner or can be removed via an orifice (109) distinct from the orifice (50) for evacuating the scale.

2. Ironing apparatus (1) according to claim 1, **characterised in that** the filter (7; 107) is configured to contain the particles of scale in a cavity (51; 151) for recovering the scale.

3. Ironing apparatus (1) according to one of claims 1 to 2, **characterised in that** the filter (7; 107) consists of a screen with openings smaller than 0.6mm per side, the screen advantageously having a total filtering surface area of more than 5cm².

4. Ironing apparatus (1) according to any of claims 1 to 3, **characterised in that** the filter (7; 107) is positioned in a portion of the circuit for dispensing vapour in which the flow of vapour makes a drastic change in direction, preferably of at least 90°.

5. Ironing apparatus (1) according to any of claims 1 to 4, **characterised in that** the filter (107) is carried by a frame (108) removably mounted in a housing (155).

6. Ironing apparatus (1) according to claim 5, **characterised in that** sealing means (180) are positioned at the interface between the frame (108) and the housing (155).

7. Ironing apparatus (1) according to any of claims 1 to 6, **characterised in that** it comprises a removable container (6) for recovering scale that is inserted into the cavity (51; 151) for recovering the scale via the orifice for evacuating the scale (50; 150).

8. Ironing apparatus according to any of claims 1 to 7, **characterised in that** the vapour-outlet holes (10A) are made in an ironing soleplate (10) of an iron (1).

9. Ironing apparatus according to claim 8, **characterised in that** the flow of vapour moving in the circuit for dispensing vapour flows upwards through the filter (7; 107) when the iron (1) rests horizontally on its soleplate (10).

10. Ironing apparatus (1) according to any of claims 1 to 9, **characterised in that** it comprises a chamber (3) for instantaneous vaporisation.
